(19) Europäisches Patentamt
European Patent Office
Office européen des brevets

(11) Numéro de publication : 0 341 134 B1

# (12) FASCICULE DE BREVET EUROPEEN

(45) Date de publication du fascicule du brevet : **01.07.92 Bulletin 92/27**

(51) Int. Cl.$^5$ : **B25J 9/10,** B25J 5/04, B25J 9/00, B05B 13/04

(21) Numéro de dépôt : **89401196.4**

(22) Date de dépôt : **27.04.89**

## (54) Système pour réaliser des opérations sur des objets de grandes dimensions, notamment pour peindre un aéronef.

(30) Priorité : **02.05.88 FR 8805858**

(43) Date de publication de la demande : **08.11.89 Bulletin 89/45**

(45) Mention de la délivrance du brevet : **01.07.92 Bulletin 92/27**

(84) Etats contractants désignés : **DE ES GB IT NL**

(56) Documents cités :
**EP-A- 0 021 972**
**EP-A- 0 073 185**
**EP-A- 0 159 269**
**DE-A- 3 246 828**
**DE-A- 3 502 631**
**DE-A- 3 627 560**
**FR-A- 1 499 167**
**US-A- 3 007 097**
**US-A- 3 559 257**

(56) Documents cités :
**ROBOTICS ENGINEERING vol. 8, no. 2, 1986, Petersborough NH USA page 23 - 25; MONTALBANO: "Laser guided precision positioningwith a gantry robot"**

(73) Titulaire : **AEROSPATIALE SOCIETE NATIONALE INDUSTRIELLE Société Anonyme dite:
37, Boulevard de Montmorency
F-75016 Paris (FR)**

(72) Inventeur : **Jonca, Henri Valentin Jean
Résidence des Fontaines
Bâtiment 2 30 Bld Jean Brunhes
F-31300 Toulouse (FR)**
Inventeur : **Sarramea, Claude
1, Impasse du Baujolais
F-31300 Toulouse (FR)**

(74) Mandataire : **Bonnetat, Christian
CABINET BONNETAT 23, Rue de Léningrad
F-75008 Paris (FR)**

EP 0 341 134 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un système pour réaliser des opérations sur des objets de grandes dimensions, notamment pour peindre un aéronef.

Dans le domaine aéronautique, les opérations habituelles de finissage et d'entretien des aéronefs, comme par exemple la peinture, le ponçage ou le lavage, posent des problèmes particuliers du fait même des dimensions souvent importantes des aéronefs, en particulier lorsqu' il s'agit d'avions "gros porteurs".

De telles opérations peuvent bien sûr être réalisées manuellement. Pour ce faire, l'avion est amené dans un hangar, et les opérateurs travaillent à partir de plates-formes reliées à des nacelles suspendues à des ponts roulants se déplaçant au-dessus de l'avion.

Si de telles opérations manuelles sont satisfaisantes quant à leurs résultats, elles ne le sont absolument pas en ce qui concerne les conditions dans lesquelles elles sont effectuées. En effet, elles prennent beaucoup de temps et/ou nécessitent une main-d'oeuvre importante, ce qui implique une longue immobilisation au sol des appareils et des coûts prohibitifs. De plus, pour certaines opérations, comme par exemple la peinture, les ouvriers sont amenés à travailler dans un milieu hostile, nuisible à leur santé, du fait, par exemple, de la présence de particules de peinture en suspension dans le milieu ambiant.

Pour toutes ces raisons, on a envisagé d'automatiser de telles opérations. Pour cela, des bras articulés, dont l'extrémité libre porte l'organe de travail, sont reliés à l'ensemble classique formé de ponts roulants et de nacelles, les déplacements desdits ponts roulants, nacelles et bras étant asservis à des moyens de commande appropriés. Quand il s'agit par exemple d'une opération de lavage, l'automatisation ne pose pas de problèmes particuliers, tout au moins en ce qui concerne la précision desdits déplacements, d'éventuelles différences de position pouvant être absorbées par les brosses de lavage. Cela n'est pas le cas pour d'autres opérations comme la peinture. On conçoit, en effet, que la peinture d'un avion exige une grande précision, de l'ordre du millimètre. Cependant, les ponts roulants, par exemple, du fait de leurs grandes dimensions (de plusieurs dizaines de mètres à une centaine de mètres pour des "gros porteurs") ne peuvent être déplacés, par l'intermédiaire desdits moyens de commande, qu'avec une précision de l'ordre du centimètre (précision au demeurant suffisante pour une opération telle que le lavage). Un problème semblable se pose en ce qui concerne le déplacement des nacelles par rapport au pont roulant sur lequel elles évoluent.

On remarquera que, par le document DE-A-3 246 828, on connaît déjà un système pour réaliser des opérations sur des objets de grandes dimensions du type comprenant:

– un équipage mobile suivant une première direction X,X′ et suivant une deuxième direction Y,Y′ orthogonale à ladite première direction X,X′, ledit équipage portant au moins un bras articulé dont l'extrémité libre est munie d'au moins un organe destiné à effectuer un travail prédéterminé, à partir d'une position de référence définie par rapport à l'objet à traiter,
– des moyens moteurs pour déplacer ledit équipage vers une position de consigne, et
– des moyens de commande qui sont aptes, préalablement à l'exécution dudit travail prédéterminé, à :
– commander le déplacement dudit équipage, par l'intermédiaire desdits moyens moteurs, vers ladite position de consigne,
– recevoir des informations des moyens de détection montés sur ledit équipage pour mesurer l'écart entre la position réelle dudit équipage et ladite position de consigne,
– traiter lesdites informations, et commander, en fonction desdites informations, le déplacement dudit ou desdits bras articulés pour amener ledit organe de travail dans ladite position de référence.

Un tel système connu ne peut corriger les écarts de position dus à la médiocre précision de sa grosse mécanique, ni prendre en compte l'impossibilité pratique de disposer l'objet, notamment un aéronef dans une salle de peinture, avec la précision requise.

La présente invention a pour but d'éviter les invonvénients mentionnés ci-dessus, et concerne un système du type précité adapté pour effectuer, automatiquement et avec une grande précision, des opérations sur des objets de grandes dimensions, et, en particulier, la peinture d'avions "gros porteurs". Le système conforme à l'invention permet de s'affranchir à la fois de la précision médiocre de la grosse mécanique du système proprement dit et de la précision du positionnement de l'objet à traiter relativement au système, elle aussi médiocre du fait en particulier des grandes dimensions de l'objet.

A cette fin, selon l'invention, le système du type précité est caractérisé en ce que ledit équipage comprend des premiers moyens mobiles suivant la première direction (X,X′) et des seconds moyens mobiles suivant la deuxième direction (Y,Y′), lesdits seconds moyens mobiles étant portés par lesdits premiers moyens et portant ledit ou lesdits bras articulés, et en ce que lesdits moyens de commande sont aptes à commander le déplacement dudit ou desdits bras articulés pour amener ledit organe de travail dans ladite position de référence en fonction d'informations concernant l'écart entre la position réelle et une position de consigne prédéterminée de l'objet à traiter, ledit écart étant déterminé à l'aide de moyens de mesure montés à l'extrémité libre du ou

desdits bras articulés et destinés à venir au contact de points de l'objet, caractéristiques de la position de ce dernier.

On s'affranchit ainsi de la médiocre précision concernant la "grosse mécanique" (les premiers et seconds moyens mobiles), en n'ayant plus à prendre en compte que la précison relative aux bras articulés, en tout état de cause plus "souples" et dont les zones d'action sont d'étendue nettement inférieure à celle de la "grosse mécanique", ce qui permet d'atteindre les précisions requises, de l'ordre du millimètre.

Avantageusement, lesdits premiers et second moyens mobiles sont susceptibles d'être déplacés vers une pluralité de positions de consigne, réparties le long de voies de déplacement respectives desdits premiers et second moyens.

En particulier, lesdites positions de consigne peuvent être régulièrement réparties le long desdites voies.

De préference, lesdits moyens de commande sont constitués par un calculateur apte à piloter une pluralité d'unités de commande, une unité de commande étant associée à chacun des ensembles de premiers et seconds moyens mobiles, ainsi qu'à chacun desdits bras articulés.

Avantageusement, chacune desdites unités de commande comprend des moyens pour dialoguer avec ledit calculateur, reliés à des moyens de commande proprement dits des différents moyens moteurs associés auxdits premiers et seconds moyens mobiles, ainsi qu'auxdits bras articulés.

De préférence, lesdits premiers moyens mobiles sont constitués par au moins un pont roulant, et lesdits seconds moyens mobiles par au moins une nacelle.

En particulier, chaque pont roulant porte deux nacelles disposées respectivement de part et d'autre de l'objet à traiter en position de travail, et portant chacune au moins un bras articulé.

De préférence chacun desdits bras articulés est susceptible de se déplacer suivant lesdites première et seconde directions X,X′ et Y,Y′, ainsi que suivant une troisième direction Z,Z′ orthogonale auxdites première et seconde directions X,X′ et Y,Y′.

Les figures du dessin annexé feront bien comprendre comment l'invention peut être réalisée. Sur ces figures, des références identiques désignent des éléments semblables.

La figure 1 est une vue schématique de dessus d'un exemple de réalisation du système de l'invention.

La figure 2 est une vue schématique de côté d'un exemple de réalisation d'une nacelle et d'un bras articulé selon l'invention.

La figure 3 est une vue schématique de côté d'une variante de réalisation d'une nacelle et d'un bras articulé selon l'invention.

La figure 4 est une vue schématique partielle semblable à la figure 1.

La figure 5 illustre les différentes zones d'action possibles pour l'organe de travail.

La figure 6 illustre l'écart entre la position de consigne et la position réelle d'une nacelle.

La figure 7 montre l'écart entre la position de consigne et la position réelle de l'avion à peindre.

La figure 8 est un diagramme synoptique des moyens de commande selon l'invention.

La figure 9 est un schéma d'une unité de commande.

On décrira, ci-après, un exemple de réalisation du système de l'invention, plus particulièrement adapté pour peindre un avion du type "gros porteur".

La salle de peinture, dans son ensemble, est constituée, dans l'exemple envisagé, d'un bâtiment (non représenté) de grandes dimensions, correspondant aux dimensions de l'avion à peindre (une cinquantaine de mètres de long et approximativement autant d'envergure, par exemple), bâtiment équipé de deux chemins de roulement 1,2 parallèles, s' étendant suivant une première direction X,X′, sur lesquels peuvent circuler deux ponts roulants 3,4 s'étendant suivant une deuxième direction Y,Y′ orthogonale à ladite première direction X,X′ (figure 1). Chacun des ponts roulants 3,4 supporte deux nacelles 5,6 ; 7,8 pouvant se déplacer, sous le pont correspondant, suivant ladite deuxième direction Y,Y′. Les nacelles 5,6 ; 7,8 de chaque pont 3,4 sont disposées respectivement de part et d'autre de l'avion 9 en position de travail. Plus particulièrement, un pont 3 est destiné à travailler en avant des ailes de l'avion, et l'autre pont 4 entre ces dernières et l'empennage.

Chaque nacelle est équipée d'un bras articulé 10 (éventuellement de plusieurs bras), dont l'extrémité libre est munie d'un organe de travail 11, en l'occurrence un pistolet de peinture, comme on peut mieux le voir sur les figures 2 et 3.

Les déplacements des ponts roulants 3,4 sur les chemins de roulement 1,2, et des nacelles 5,6 ; 7,8 sur les ponts 3,4, sont obtenus par des moyens moteurs respectifs 13,14 et 15, symboliquement représentés sur les figures 1,2 et 3.

Selon les besoins, les bras articulés 10 peuvent présenter différentes structures, dont deux exemples sont montrés sur les figures 2 et 3.

En référence à la figure 2, le bras 10 est constitué de tronçons de bras 10a, 10b et 10c articulés les uns par rapport aux autres. Plus particulièrement, le tronçon 10a peut tourner autour de l'axe Z,Z′, orthogonal auxdites directions X,X′ et Y,Y′, et est relié, de façon pivotante, au tronçon 10b, lui-même relié, de façon pivotante,

au tronçon 10c. Ce dernier tronçon de bras est télescopique, et porte, à son extrémité libre, une chape 10d de support de l'organe de travail 11, ladite chape étant reliée, de façon pivotante, audit tronçon 10c.

Sur la figure 3, est illustrée l'adaptation d'un bras articulé 10 à une structure actuellement utilisée pour la peinture manuelle. Le bras 10 est monté sur une plate-forme 16 (jusqu'à présent utilisée par les peintres) reliée à la nacelle par l'intermédiaire d'un tube télescopique 17.

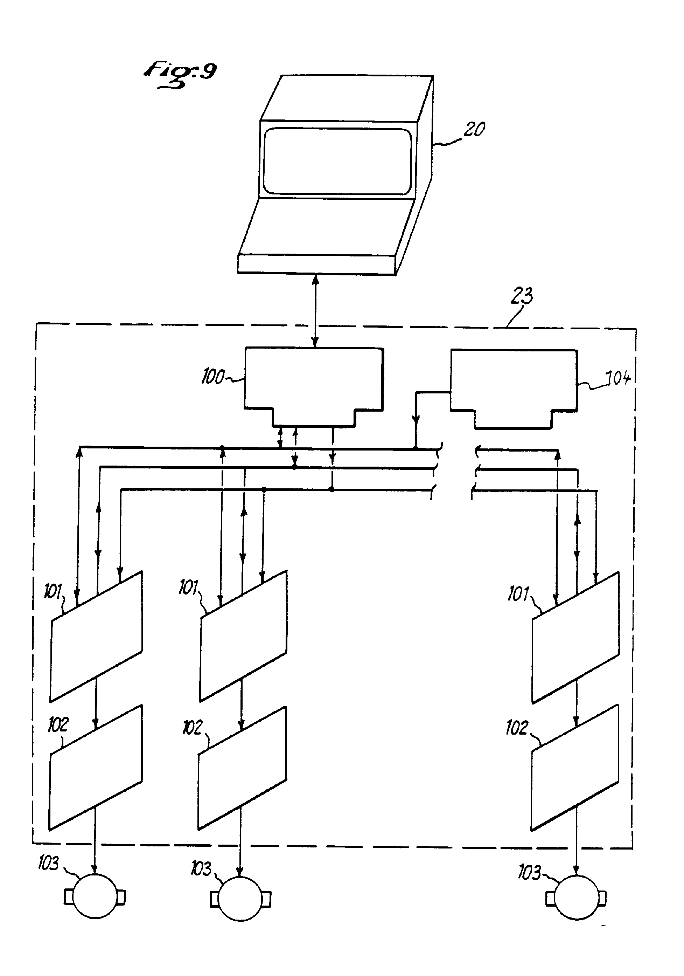

Les déplacements des ponts roulants, nacelles et bras articulés, qui viennent d'être décrits, sont commandés à partir d'un calculateur 20 apte à piloter une pluralité d'unités de commande individuelles 21-26 (figure 8).

Une unité de commande 21,22 est associée à chaque ensemble constitué par un pont roulant et ses deux nacelles, d'une part, et une unité de commande 23,24 ; 25,26 est associée à chacun des bras articulés correspondants, d'autre part. On notera que le diagramme de la figure 8 illustre le cas particulier où deux ponts roulants portent chacun deux nacelles, chaque nacelle portant un bras articulé (figure 1).

Plus spécifiquement, selon l'invention, les moyens de commande, constitués par le calculateur 20 et lesdites unités de commande 21-26 qui lui sont associées, sont aptes à :

– commander le déplacement des ponts roulants 3,4 et des nacelles 5,6 ; 7,8, par l'intermédiaire des moyens moteurs associés 13,14 ; 15, vers une position de consigne,
– recevoir des informations de moyens de détection (décrits par la suite), montés sur les ponts et les nacelles, pour mesurer l'écart entre la position réelle des ponts et des nacelles et ladite position de consigne,
– traiter lesdites informations, et commander, en fonction desdites informations, le déplacement des bras articulés 10 pour amener l'organe de travail 11 dans une position de référence à partir de laquelle ledit organe 11 doit effectuer un travail prédéterminé.

Plus particulièrement, et en se référant à la figure 4, chaque pont roulant (par exemple, le pont désigné par la référence numérique 3) peut être déplacé vers une pluralité de positions de consigne 30a,30b,30c réparties, notamment régulièrement, le long des chemins de roulement 1,2. De même, chaque nacelle (par exemple, la nacelle désignée par la référence numérique 5) peut être déplacée vers une pluralité de positions de consigne 31a,31b,31c réparties, notamment régulièrement, le long du pont correspondant 3.

Le positionnement respectif des ponts et nacelles peut être relativement peu précis à l'intérieur d'une zone admissible (lesdites zones étant hachurées sur la figure 4), dans laquelle la position réelle de chaque pont et de chaque nacelle sera mesurée avec précision, par exemple à l'aide de codeurs optiques, symbolisés par des traits référencés 32,33 sur la figure 4. Cette mesure pourra être donnée sous forme d'un écart $\delta x$, $\delta y$ (bien évidemment exagéré sur la figure) par rapport à la position centrale de la zone admissible correspondante, c'est-à-dire la position de consigne 30a,30b,30c ; 31a,31b,31c.

Ainsi, de telles mesures, données sous forme d'écarts par rapport à des positions de consigne, permettent, en définitive, de déterminer la position réelle de chaque nacelle (par exemple 5) par rapport à un repère fixe lié à la salle de peinture. Ces informations permettent de commander le déplacement du bras articulé 10 pour amener l'organe de travail 11 dans une position de référence, comme l'illustre la figure 6, où les traits pleins correspondent à des positions réelles et les traits mixtes à des positions de consigne.

Les positions pouvant être atteintes par chaque ensemble pont/nacelle ne sont pas continues, mais discrètes. Chaque nacelle peut donc occuper les sommets 34 d'un quadrillage de l'espace (figure 5). Pour chaque position, le volume de travail 35 du bras sera centré sur le sommet 34. Les volumes de travail 35 ont une intersection non nulle afin de couvrir tout l'espace. Ainsi, l'avion est "découpé" en tranches 36, chacune d'elles étant peinte à partir d'une position donnée du pont.

Par ailleurs, les moyens de commande (le calculateur 20 et les unités de commande 23-26) sont aptes à commander le déplacement des bras articulés 10 pour amener l'organe de travail 11 dans ladite position de référence en fonction d'informations (référence 40 sur la figure 8) concernant l'écart entre la position réelle et une position de consigne prédéterminée de l'avion 9 à peindre.

Il est en effet impossible, en pratique, de disposer l'avion dans la salle de peinture avec la précision requise. Pour résoudre ce problème, l'avion est placé à l'intérieur d'une zone admissible, puis des mesures sont effectuées pour déterminer l'écart entre sa position réelle et une position de consigne prédéterminée.

Ledit écart peut être déterminé, par exemple, à l'aide de moyens de mesure 41, montés à l'extrémité libre d'un bras articulé 10, et destinés à venir au contact de points de l'avion, caractéristiques de la position de ce dernier. Ces moyens de mesure 41, symboliquement représentés sur la figure 1, peuvent être de forme sensiblement conique de façon à venir s'appliquer sur lesdits points, notamment les extrémités A,A′ de l'avion 9.

Lesdits moyens de mesure sont amenés en position en "mode manuel" par un opérateur. Une fois ceux-ci en place, l'opérateur valide la position qui est alors prise en compte par le calculateur. L'avion étant considéré comme une droite joignant ses extrémités, il est clair que la droite A,A′ correspondant à la position de l'avion sera là transformée de la droite théorique $A_T,A'_T$ par une translation T et une rotation $\theta$ (figure 7).

Les travaux à effectuer étant référencés par rapport à l'avion et non par rapport à la salle, il convient de corriger les consignes destinées aux bras articulés, en fonction de l'écart entre la position réelle et la position

de consigne de l'avion. Pour cela, on pourra utiliser les équations ci-dessous qui donnent la transformation à appliquer à tout point Pt théorique pour obtenir les coordonnées, dans un repère lié à la salle, d'un point P correspondant à la position réelle de l'avion.

En supposant la position théorique $A_T,A'_T$ parallèle à l'axe X,X', et en notant :

$$\vec{T} \left| \begin{array}{l} Tx \\ Ty \end{array} \right.$$

la translation et θ la rotation, on peut écrire :

$$\begin{cases} xp = xA + (xPt + Tx - xA).\cos\theta - (yPt + Ty - yA).\sin\theta \\ yp = yA + (xPt + Tx - xA).\sin\theta + (yPt + Ty - yA).\cos\theta \end{cases}$$

où le point A est celui de la figure 7.

En référence à la figure 9, on décrira ci-après, à titre d'exemple, une structure particulière d'une unité de commande, comme l'unité 23 associée à un bras articulé 10.

L'unité de commande 23 comporte un certain nombre de cartes a microprocesseur. Ainsi, une carte "maître" 100 permet de dialoguer avec le calculateur 20. Cette carte "maître" 100 communique, au moyen d'un bus intercarte, avec différentes cartes "d'axe" 101, dont chacune est associée à un moteur 103, commandant le déplacement d'un tronçon de bras 10a,10b,10c..., par l'intermédiaire d'une carte "d'interface" 102. Par ailleurs, l'unité de commande 23 comporte un circuit d'initialisation 104.

De manière générale, le calculateur 20 envoie des consignes vers l'unité de commande 23. Les consignes sont reçues par la carte "maître" 100, qui les analyse afin de les transmettre aux cartes "d'axe" destinatrices 101, qui, à leur tour, les transmettent aux moteurs correspondants 103.

On décrira maintenant le fonctionnement du système selon l'invention.

Comme déjà indiqué, les ponts roulants et les nacelles ne peuvent pas être déplacés avec la précision requise pour les opérations à exécuter, comme la peinture d'un avion du type "gros porteur". En revanche, il est possible de mesurer leur position de façon suffisamment précise.

Le principe de fonctionnement du système de l'invention est le suivant.

Le calculateur 20 possède, dans sa mémoire, des informations concernant différentes positions de consigne pour les ponts 3,4 et nacelles 5,6 ; 7,8. Ces informations sont transmises aux unités de commande 21,22 correspondant, respectivement, aux ensembles constitués chacun d'un pont et de deux nacelles. Ces unités de commande 21,22 pilotent le déplacement des ponts et nacelles avec la précision permise par la "grosse mécanique". Il existera donc, entre la position réelle des ponts et nacelles et la position de consigne, un écart supérieur à la précision requise. Sur requête du calculateur, les unités de commande 21,22 déclenchent des opérations de mesure de cet écart, correspondant à une translation par rapport à la position de consigne (figure 6). Le calculateur 20, en tenant compte de cet écart, pourra modifier les jeux de consignes destinées aux unités de commande 23-26 des bras articulés 10 pour amener leur organe de travail 11 dans la position de référence prédéterminée, ou position d'initialisation du travail à effectuer.

Pour des raisons pratiques, il est avantageux de définir un jeu de zones d'arrêt pour les ponts roulants et les nacelles, correspondant aux volumes de travail 35 (figure 5) pour les bras 10. Lors de l'exécution de l'opération, les mouvements des organes de travail dépendent ainsi uniquement des déplacements des bras articulés correspondants. Les déplacements des ponts et nacelles peuvent être considérés comme des "temps morts" en ce qui concerne l'opération proprement dite à effectuer, et ne servent en fait qu'à changer de volume de travail.

Par ailleurs, comme indiqué précédemment, il faut également tenir compte du manque de précision du positionnement de l'avion.

En définitive, il convient tout d'abord de placer l'avion, dans la salle de peinture, le plus près possible de sa position de consigne. Puis, en mode manuel, on déplace des bras articulés 10 pour amener des moyens de mesure 41 sur les extrémités de l'avion. Après validation de la position, celle-ci est lue par le calculateur 20. A partir d'un jeu J1 de consignes théoriques, le calculateur 20 détermine un jeu J2 de consignes prenant en compte l'écart de position de l'avion.

Par ailleurs, le calculateur 20 est apte à envoyer des consignes aux unités de commande 21,22 des ponts et nacelles pour les déplacer dans des volumes de travail 35 déterminés. La position réelle des ponts et nacelles est mesurée par l'intermédiaire des unités de commande 21,22, sur requête du calculateur. Cette mesure est utilisée par le calculateur 20 pour déterminer, à partir du jeu J2 de consignes précédent, un jeu J3 de consignes tenant compte de l'écart de position des ponts et nacelles. Ce jeu J3 de consignes est envoyé aux unités de commande 23-26 des bras articulés 10 pour amener l'organe de travail 11 dans la position de référence de celui-ci, qui peut alors exécuter l'opération qui lui a été assignée.

Le système de l'invention permet ainsi, en "découplant" la commande des déplacements de la "grosse mécanique" (pont et nacelles) et des bras articulés, d'atteindre les précisions de positionnement requises, de l'ordre du millimètre, pour des opérations comme la peinture d'un avion du type "gros porteur".

## Revendications

1. Système pour réaliser des opérations sur des objets de grandes dimensions du type comprenant :
– un équipage (3,4,5,6,7,8) mobile suivant une première direction X,X′ et suivant une deuxième direction Y,Y′ orthogonale à ladite première direction X,X′, ledit équipage portant au moins un bras articulé (10) dont l'extrémité libre est munie d'au moins un organe (11) destiné à effectuer un travail prédéterminé, à partir d'un position de référence définie par rapport à l'objet à traiter,
– des moyens moteurs (13, 14, 15) pour déplacer ledit équipage vers une position de consigne, et
– des moyens de commande (20, 21-26), qui sont aptes, préalablement à l'exécution dudit travail prédéterminé, à :
– commander le déplacement dudit équipage, par l'intermédiaire desdits moyens moteurs (13,14,15), vers ladite position de consigne,
– recevoir des informations de moyens de détection (32,33) montés sur ledit équipage pour mesurer l'écart l'écart entre la position réelle dudit équipage et ladite position de consigne,
– traiter lesdites informations, et commander, en fonction desdites informations, le déplacement du ou desdits bras articulés (10) pour amener ledit organe de travail (11) dans ladite position de référence,
caractérisé en ce que ledit équipage comprend des premiers moyens (3,4) mobiles suivant la première direction (X,X′) et des seconds moyens (5,6,7,8) mobiles suivant la deuxième direction Y,Y′, lesdits seconds moyens mobiles étant portés par lesdits premiers moyens et portant ledit ou lesdits bras articulés (10), et en ce que lesdits moyens de commande (20,21-26) sont aptes à commander le déplacement dudit ou desdits bras artilés (10) pour amener ledit organe de travail (11) dans ladite position de référence en fonction d'informations concernant l'écart entre la position réelle et une position de consigne prédéterminée de l'objet (9) à traiter, ledit écart étant déterminé à l'aide de moyens de mesure (41) montés à l'extrémité libre du ou desdits bras articulés (10) et destinés à venir au contact de points (A,A′) de l'objet (9), caractéristiques de la position de ce dernier.

2. Système selon la revendication 1,
caractérisé en ce que lesdits premiers (3,4) et seconds (5,6;7,8) moyens mobiles sont susceptibles d'être déplacés vers une pluralité de positions de consignes (30a,30b,30c; 31a,31b,31c), réparties le long des voies de déplacement respectives desdits premiers (3,4) et seconds (5,6;7,8) moyens.

3. Système selon la revendication 2,
caractérisé en ce que lesdites positions de consigne (30a,30b,30c;31a,31b,31c) sont régulièrement réparties le long desdites voies.

4. Système selon l'une quelconque des revendications 1 à 3,
caractérisé en ce que lesdits moyens de commande sont constitués par un calculateur (20) apte à piloter une pluralité d'unités de commande (21-26), une unité de commande (21,22) étant associée à chacun des ensembles de premiers (3,4) et seconds (5,6,7,8) moyens mobiles, ainsi qu'à chacun desdits bras articulés (10).

5. Système selon la revendication 4,
caractérisé en ce que chacune desdites unités de commande (21-26) comprend des moyens (100) pour dialoguer avec ledit calculateur, reliés à des moyens de commande proprement dits (101,102) des différents moyens (13,14 ; 15 ; 103) moteurs associés auxdits premiers (3,4) et seconds (5,6 ; 7,8) moyens mobiles, ainsi qu'auxdits bras articulés (10).

6. Système selon l'une quelconque des revendications précédentes,
caractérisé en ce que lesdits premiers moyens mobiles sont constitués par au moins un pont roulant (3,4), et lesdits seconds moyens mobiles par au moins une nacelle (5,6 ; 7,8).

7. Système selon la revendication 6,
caractérisé en ce que chaque pont roulant (3,4) porte deux nacelles (5,6 ; 7,8) disposées respectivement de

part et d'autre de l'objet (9) à traiter en position de travail, et portant chacune au moins un bras articulé (10).

8. Système selon l'une quelconque des revendications précédentes,
caractérisé en ce que chacun desdits bras articulés (10) est susceptible de se déplacer suivant lesdites première et seconde directions X,X′ et Y,Y′, ainsi que suivant une troisième direction Z,Z′ orthogonale auxdites première et seconde directions X,X′ et Y,Y′.

## Patentansprüche

1. System zum Ausführen von Arbeiten auf großmaßigen Gegenständen mit:
– einem Gerät (3, 4, 5, 6, 7, 8), welches in einer ersten Richtung X,X′ und in einer zweiten, zu der genannten ersten Richtung X,X′ orthogonalen Richtung Y,Y′ beweglich ist, welches genannte Gerät mindestens einen Gelenkarm (10) trägt, dessen freies Ende mit mindestens einem Organ (11) ausgerüstet ist, mit welchem von einer Bezugsposition aus, welche im Verhältnis zu dem zu bearbeiten-en Gegenstand definiert ist, eine vorbestimmte Arbeit verrichtet werden kann,
– Antriebsmitteln (13, 14, 15) zum Verfahren des gennanten Gerätes in eine Sollposition und
– Steuerungsmitteln (20, 21 - 26), welche geeignet sind, vor Verrichtung der gennanten vorbestimmten Arbeit
– das durch die genannten Antriebsmittel (13, 14, 15) bewirkte Verfahren des genannten Gerätes in die genannte Sollposition zu steuern,
– von Sensormitteln (32, 33), welche zwecks Messung der Abweichung der Istposition des genannten Gerätes von der genannten Sollposition des genannten Gerätes auf dem genannten Gerät angebracht sind, Informationen zu empfangen,
– die genannten Informationen zu verarbeiten und entsprechend den genannten Informationen das Verfahren des Gelenkarmes oder der Gelenkarme (10) zu steuern, um das genannte Arbeitsorgan (11) in die genannte Bezugsposition zu bringen,
daduch gekennzeichnetet, daß das genannte Gerät erste, in der ersten Richtung X, X′ bewegliche Mittel (3, 4) und zweite, in der zweiten Richtung Y,Y′ bewegliche Mittel (5, 6, 7, 8) umfaßt, welche genannten zweiten beweglichen Mittel von den genannten ersten beweglichen Mitteln getragen werden und den genannten Gelankarm oder die genannten Gelenkarme (10) tragen, und daß die genannten Steuerungsmittel (20, 21 -26) geeignet sind, das Verfahren des genannten Gelenkarmes oder der genannten Gelenkarme (10) zu steuern, um entsprechend den Informationen über die Abweichung zwischen der Istposition und einer vorbestimmten Sollposition des zu bearbeitenden Gegenstandes (9) das genannte Arbeitsorgan (11) in die genannte Bezugsposition zu bringen, wobei die genannte Abweichung mit Hilfe von Meßmitteln (41) ermittelt wird, welche am freien ende des Gelenkarmes oder der Gelenkarme (10) angebracht und dazu bestimmt sind, mit den Punkten (A, A′) des Gegenstandes (9) in Berührung zu treten, welche für dessen Position kennzeichnend sind.

2, System gemäß Anspruch 1,
dadurch gekennzeichnet, das die genannten ersten (3, 4) und zweiten (5, 6; 7, 8) beweglichen Mittel geeignet sind, sich in mehrere längs der jeweiligen Verfahrwege der genannten ersten (3, 4) und zweiten (5, 6, 7, 8) beweglichen Mittel verteilte Sollpositionen (30a, 30b, 30c; 31a, 31b, 31c) verfahren zu lassen.

3. System gemäß Anspruch 2,
dadurch gekennzeichnet, daß die genannten Sollpositionen (30a, 30b, 30c; 31a, 31b, 31c) längs der genannten Wege gleichmäßig verteilt sind.

4. System gemäß einem der Ansprüche 1 bis 3,
dadurch gekennzeichnet, daß die genannten Antriebsmittel aus einem zur Führung mehrerer Steuerungseinheiten (21 - 26) geeigneten Rechner (20) bestehen, wobei jeder der Baugruppen der ersten (3, 4) und der zweiten (5, 6, 7, 8) beweglichen Mittel sowie jedem der genannten Gelenkarme (10) eine Steuerungseinheit (21, 22) zugeordnet ist.

5. System gemäß Anspruch 4,
dadurch gekennzeichnet, das jede der genannten Steuerungseinheiten (21 - 26) Mittel (100) zum Informationsaustausch mit dem genannten Rechner umfaßt, welche mit eigentlichen Steuerungsmitteln (101, 102) zur Steuerung der verschiedenen Antriebsmittel (13, 14; 15; 103) verbunden sind, welche den genannten ersten (3, 4) und zweiten (5, 6; 7, 8) beweglichen Mitteln sowie zu den genannten Gelenkarmen (10) zugeordnet sind.

6. System gemäß einem der vorstehenden Ansprüche, dadurch gekennzeichnet, das die genannten ersten beweglichen Mittel aus mindestens einem Laufkran (3, 4) und die genannten zweiten bewegtichen Mittel aus mindestens einer Gondel (5, 6; 7, 8) bestehen.

7. System gemäß Anspruch 6,

dadurch gekennzeichnet, das jeder Laufkran (3, 4) zwei Gondeln (5, 6; 7, 8) trägt, welche beiderseits des zu bearbeitenden Gegenstandes (9) in Arbeitsposition angeordnet sind und jeweils mindestens einen Gelenkarm (10) tragen.

8. System gemäß einem der vorstehenden Ansprüche,
dadurch gekennzeichnet, daß jeder der genannten Gelenkarme (10) geeignet ist, in der genannten ersten Richtung X,X′ und der genannten zweiten Richtung Y,Y′ sowie in einer dritten, zu der genannten ersten (X,X′) und zweiten (Y,Y′) Richtung orthogonalen Richtung Z,Z′ verfahren zu werden.

## Claims

1. System for carrying out operations on large objects of the type comprising:
– an equipment (3, 4, 5, 6, 7, 8) which is mobile in a first direction X,X′ and in a second direction Y,Y′ orthogonal to the said first direction X,X′, the said equipment carrying at least one articulated arm (10) whose free end is provided with at least one unit (11) intended to carry out a predetermined task, starting from a reference position defined with respect to the object to be processed,
– driving means (13, 14, 15) to displace the said equipment to a target position, and
– control means (20, 21-26) which are capable, prior to the execution of the said predetermined task, of:
– controlling the displacement of the said equipment, by means of the said driving means (13, 14, 15), towards the said target position,
– receiving information from detection means (32, 33) mounted on the said equipment for measuring the difference between the real position of the said equipment and the said target position,
– processing the said information and controlling, as a function of the said information, the displacement of the said articulated arm or arms (10) in order to bring the said working unit (11) into the said reference position,
characterised in that the said equipment comprises first means (3, 4) which are mobile in the first direction (X,X′) and second means (5, 6, 7, 8) which are mobile in the second direction (Y,Y′), the said second mobile means being carried by the said first means and carrying the said articulated arm or arms (10), and in that the said control means (20, 21-26) are capable of controlling the displacement of the said articulated arm or arms (10) in order to bring the said working unit (11) into the said reference position as a function of information relating to the difference between the real position and a predetermined target position of the object (9) to be processed, the said difference being determined by measurement means (41) mounted at the free end of the said articulated arm or arms (10) and intended to come into contact with points (A,A′) of the object (9) which are characteristic of the position of the latter.

2. System according to Claim 1,
characterised in that the said first (3, 4) and second (5, 6 ; 7, 8) mobile means are capable of being displaced towards a plurality of target positions (30a, 30b, 30c; 31a, 31b, 31c) distributed along respective displacement paths of the said first (3, 4) and second (5, 6; 7, 8) means.

3. System according to Claim 2,
characterised in that the said target positions (30a, 30b, 30c; 31a, 31b, 31c) are regularly distributed along the said paths.

4. System according to any one of Claims 1 to 3,
characterised in that the said control means are constituted by a computer (20) capable of controlling a plurality of control units (21-26), a control unit (21, 22) being associated with each of the assemblies of first (3, 4) and second (5, 6, 7, 8) mobile means, and with each of the said articulated arms (10).

5. System according to Claim 4,
characterised in that each of the said control units (21-26) comprises means (100) for carrying on a dialog with the said computer, connected to actual control means (101, 102) of the various driving means (13, 14; 15; 103) associated with the said first (3, 4) and second (5, 6; 7, 8) mobile means, and with the said articulated arms (10).

6. System according to any one of the preceding claims,
characterised in that the said first mobile means are constituted by at least one overhead crane (3, 4), and the said second mobile means by at least one basket (5, 6; 7, 8).

7. System according to Claim 6,
characterised in that each overhead crane (3, 4) carries two baskets (5, 6; 7, 8) disposed respectively on either side of the object (9) to be processed in the working position, and each carrying at least one articulated arm (10).

8. System according to any one of the preceding claims, characterised in that each of the said articulated arms (10) is capable of travelling in the said first and second directions X,X′ and Y,Y′, and in a third direction Z,Z′ orthogonal to the said first and second directions X,X′ and Y,Y′.

Fig:1

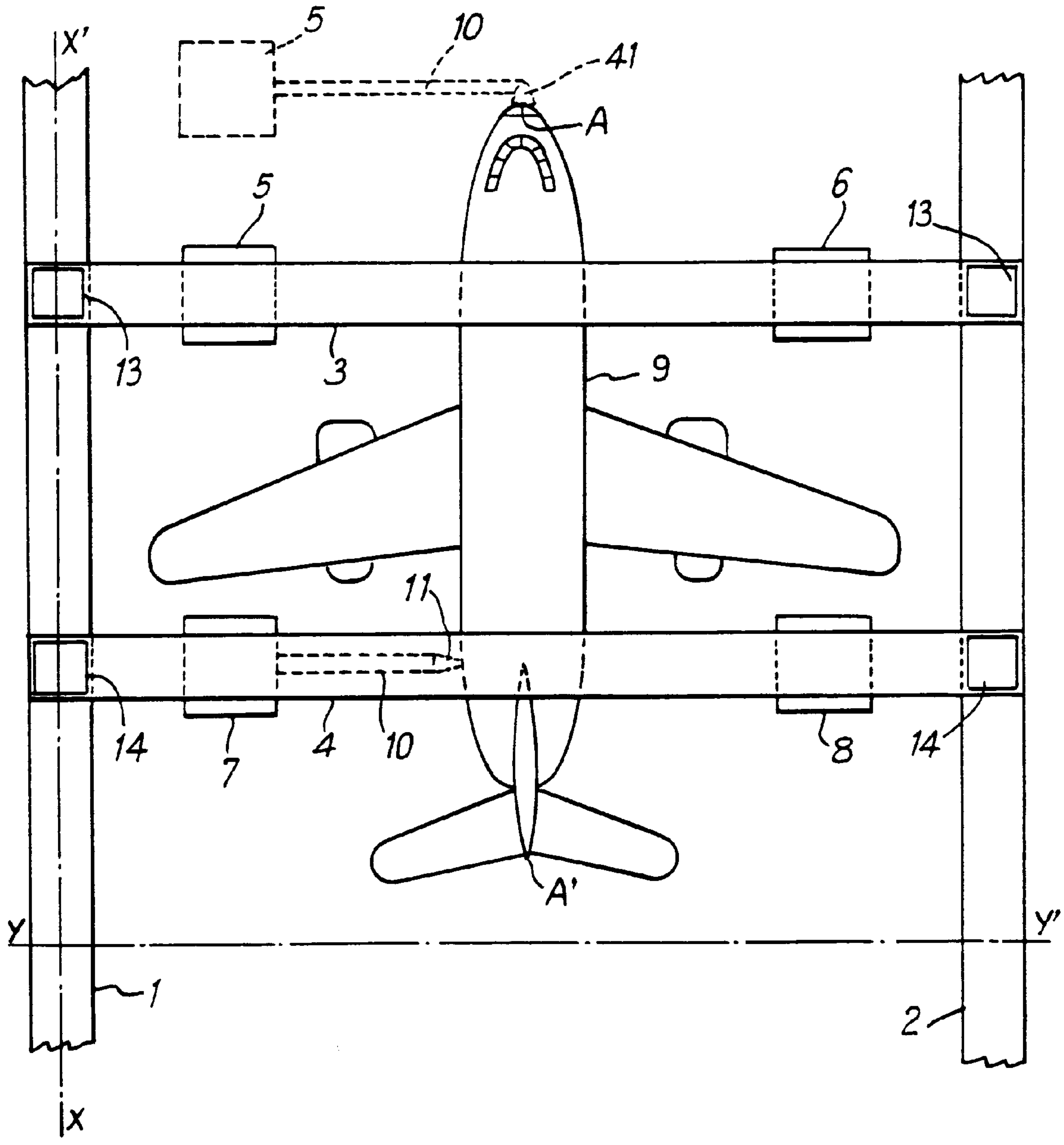

Fig: 2

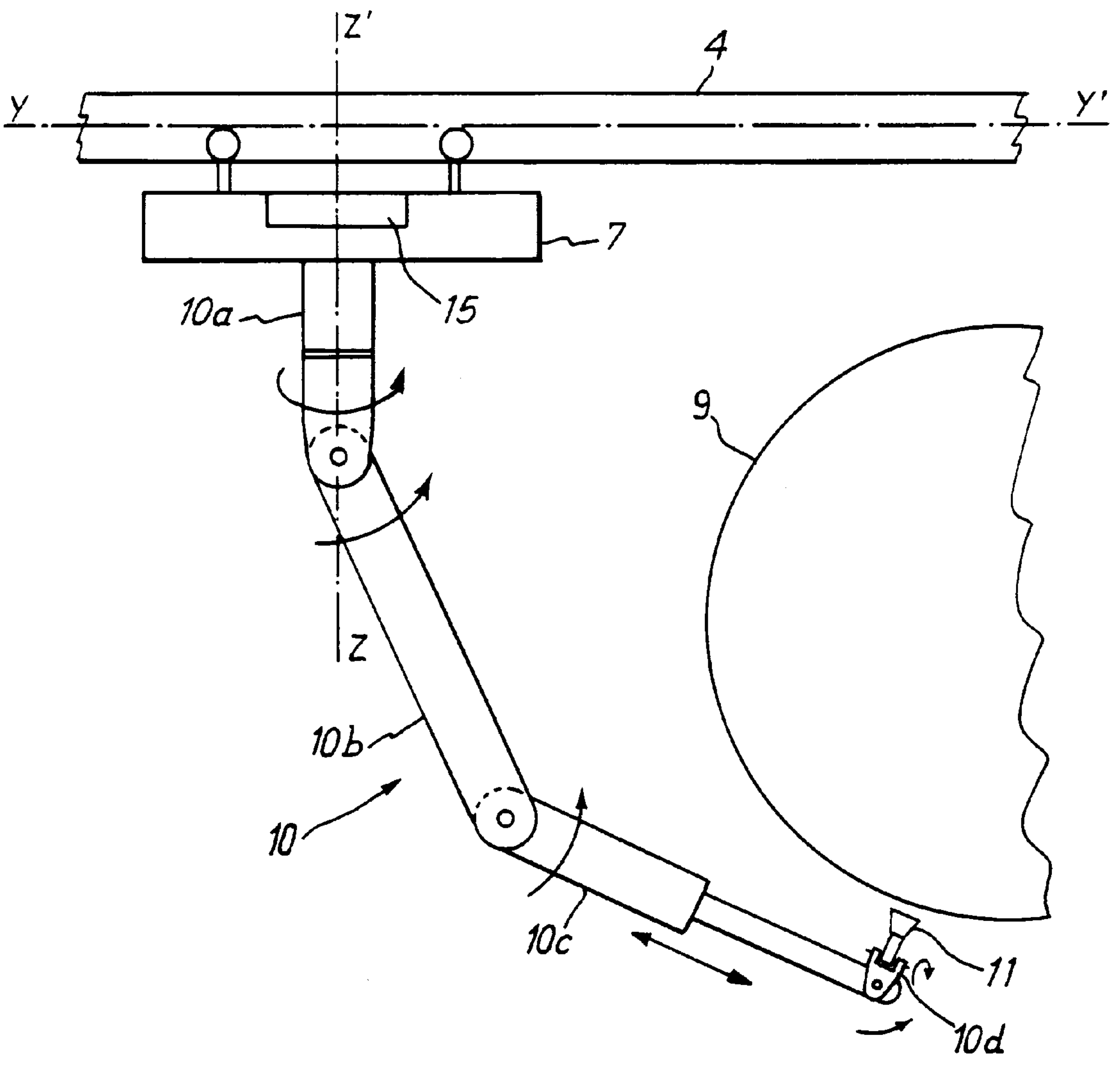

Fig. 3

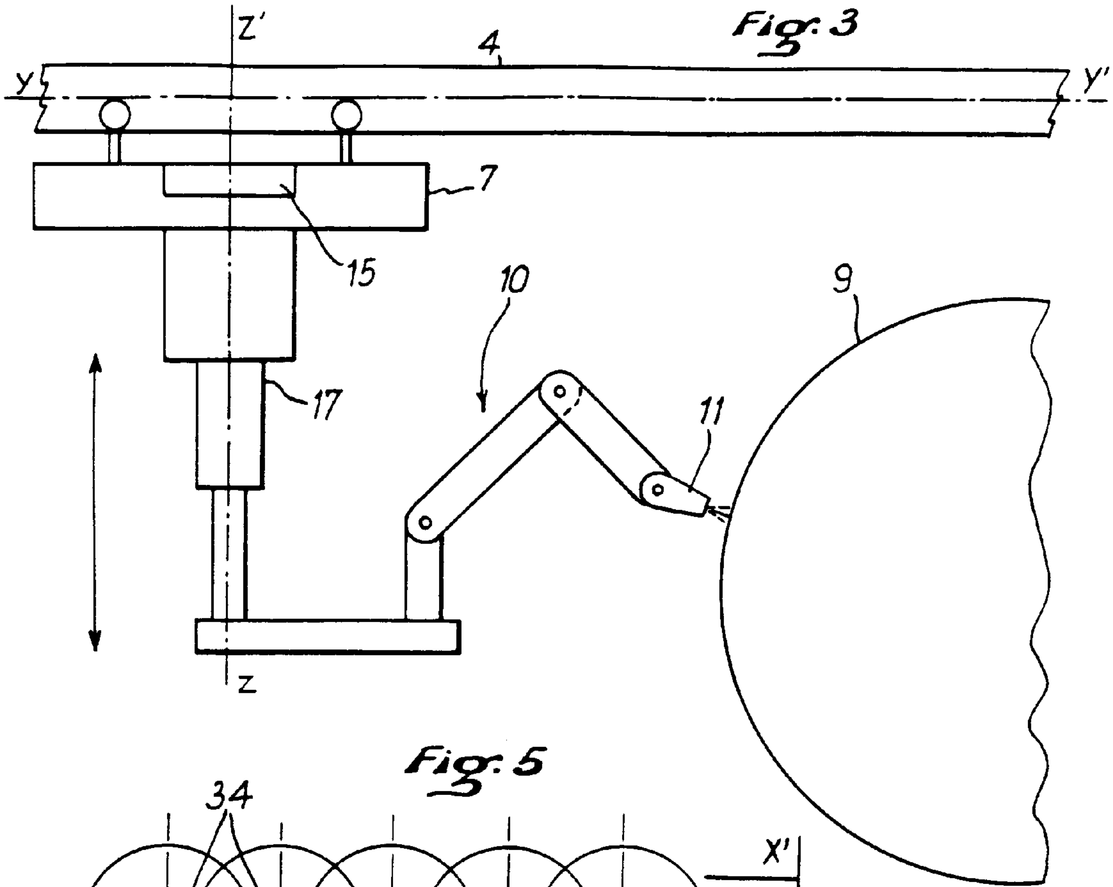


Fig. 5

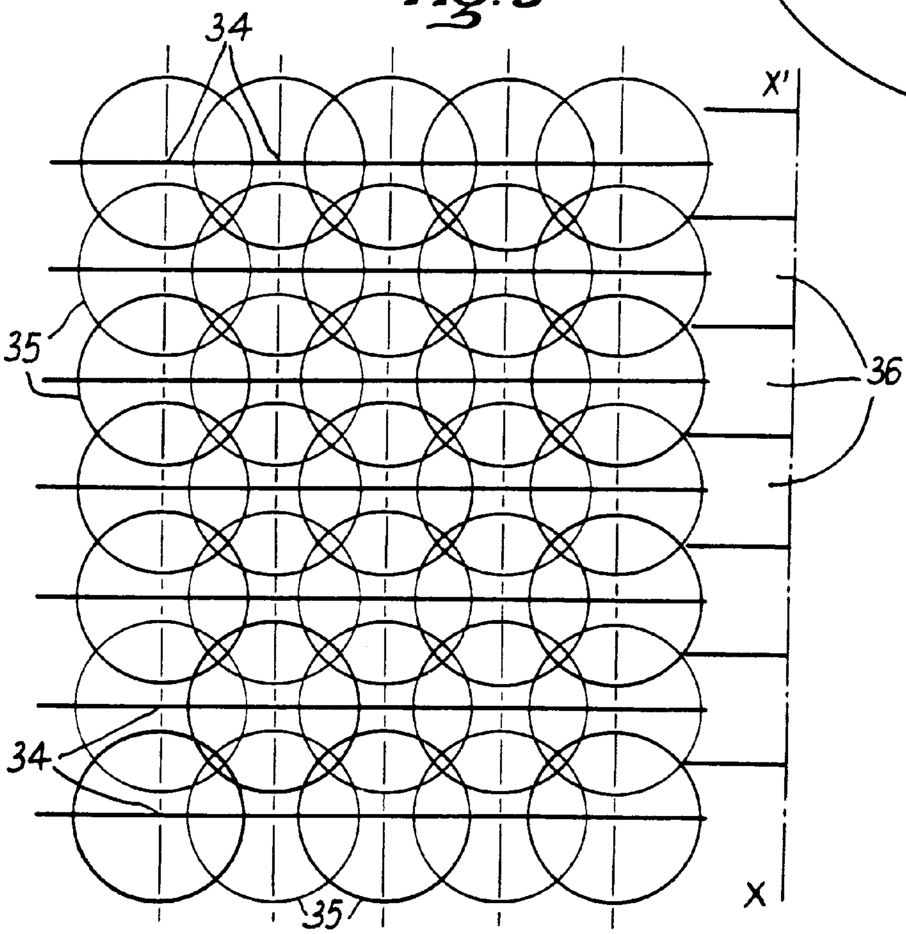

Fig: 4

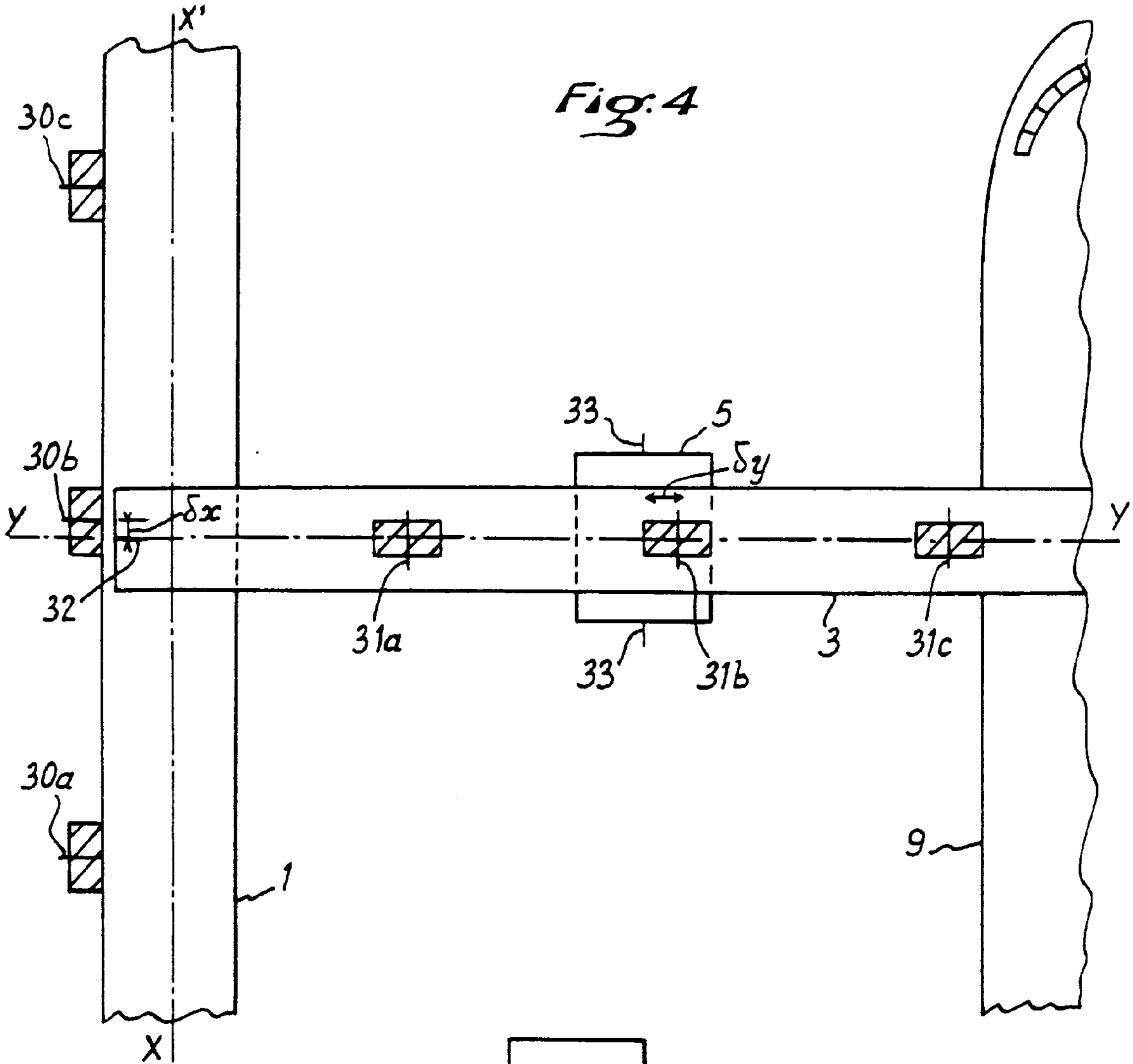
X'
30c
33
5
30b
δy
Y
δx
Y'
32
31a
33
31b
3
31c
30a
9
1
X

Fig: 8

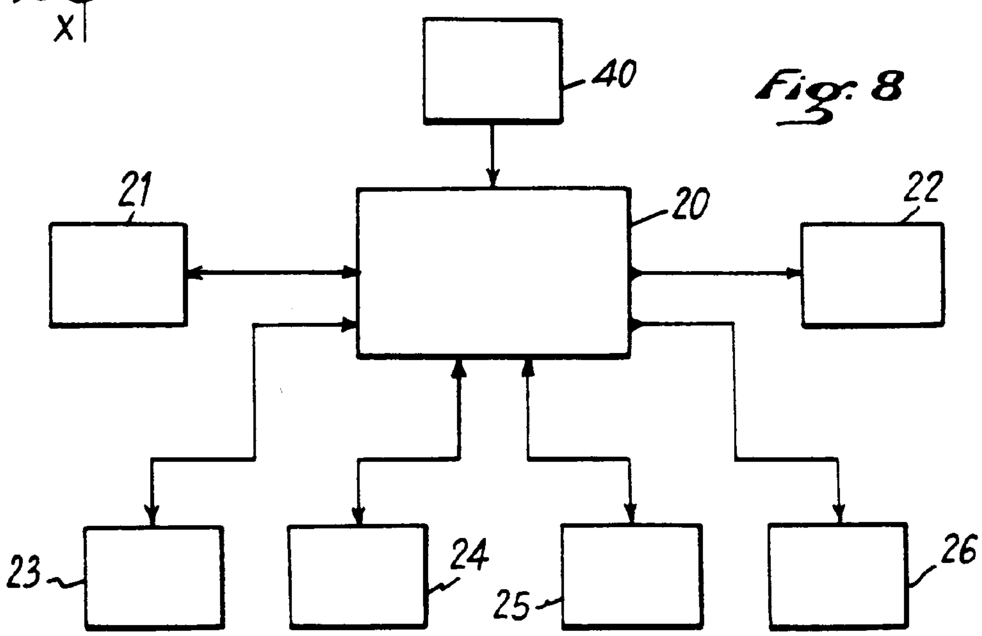
40
21
20
22
23
24
25
26

Fig. 6

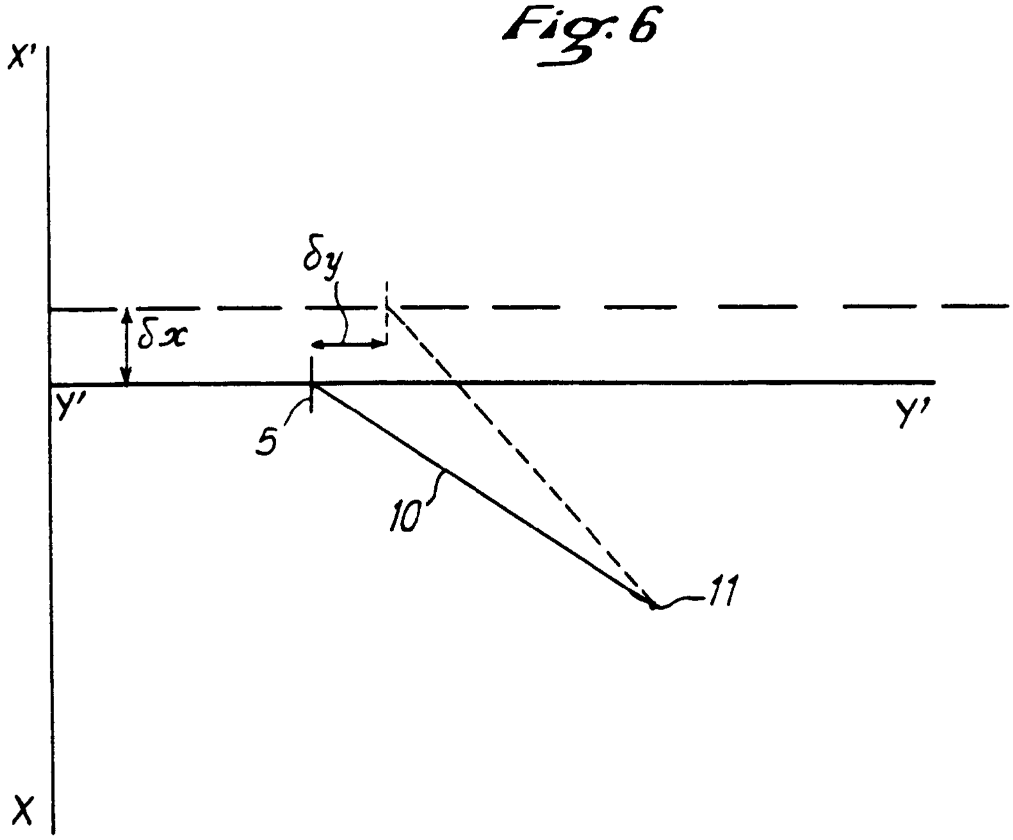


Fig. 7

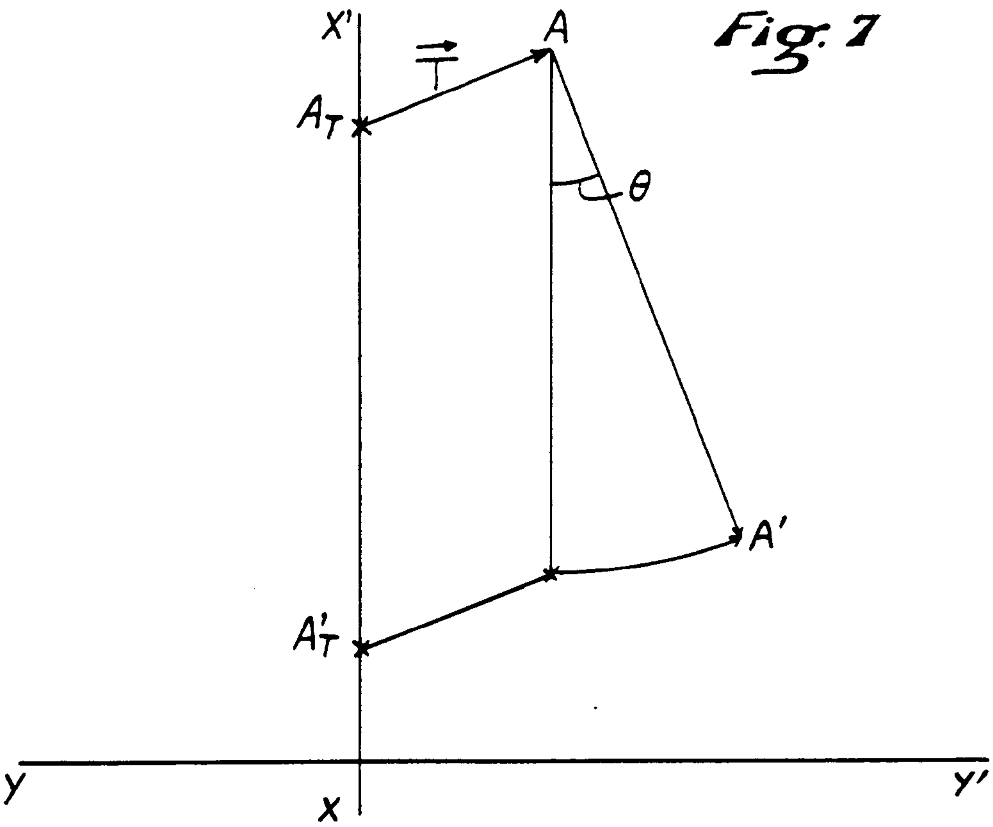

Fig:9